# NEW EUROPEAN PATENT SPECIFICATION

(11) **EP 3 384 792 B2**
(45) Date of publication and mention of the opposition decision: **24.05.2023**
(45) Mention of the grant of the patent: 26.02.2020
(21) Application number: 18165302.3
(22) Date of filing: 30.03.2018
(51) Int. Cl.: A41D 13/018, B62J 27/00

(54) **A GARMENT WEARABLE BY A USER AND AN AUTONOMOUS AIRBAG MODULE INTEGRATABLE AND REPLACEABLE IN SAID GARMENT**
EIN KLEIDUNGSSTÜCK, DAS VON EINEM BENUTZER GETRAGEN WERDEN KANN, UND EIN AUTOMATISCHES AIRBAGMODUL, DAS INTEGRIERBAR UND AUSTAUSCHBAR IN DIESEM KLEIDUNGSSTÜCK IST
VÊTEMENT PORTABLE PAR UN UTILISATEUR ET UN MODULE AIRBAG AUTONOME INTÉGRABLE ET REMPLAÇABLE DANS LEDIT VÊTEMENT

(30) Priority: 03.04.2017 IT 201700036516
(43) Date of publication of application: 10.10.2018
(73) Proprietor: Dainese S.p.A., 36064 Colceresa (Vicenza) (IT)
(72) Inventor: PETRONI, Bernardo, 36060 Vicenza (IT)
(74) Representative: Lissandrini, Marco

(56) References cited:
- EP-B1- 1 315 427
- WO-A1-00/51453
- WO-A1-2013/171674
- WO-A1-2014/001189
- WO-A1-2016/120568
- WO-A1-2016/141380

## Description

### PRIOR ART

The present invention relates to a garment that can be worn by a user (for example a motorcyclist or a person participating in sports having a high risk of traumatic injury, such as for example skiing, cycling, sailing, equitation or the like).

As is known, in recent years airbag technology has grown in use, first on vehicles and subsequently also on garments, with the aim of limiting the consequences of impacts during the course of accidents of various types.

In greater detail, these airbags protect, both statically and dynamically, appropriate parts of the body of the subject involved in the accident, by distributing the area on which mechanical pressures are bearing and controlling the deceleration of the body of the subject involved, so as to reduce traumas of various natures caused, generally, by excessive transfer of kinetic energy onto the body of the subject.

By way of example, WO2013/171674, disclosing a garment according to the preamble of claim 1, describes a "standalone wearable protector", i.e. a wearable autonomous protection device, which comprises a thin layer of support textile, an inflatable bag made of the thin layer of textile, a gas generator for inflating the bag (this gas generator is fixed to the support textile), a control unit fixed in turn to the support textile and adapted to activate the gas generator, and lastly detecting means connected to the control unit and also housed on the support textile 2.

Also known, from WO2014/001189, is another wearable protection device, which comprises a cladding with at least an inflatable bag (via a gas source) and equipped with automatic enabling means for recognising or ignoring a given identified risk situation: when the automatic enabling means predispose the device so as to be able to inflate the bag (and that is when a risk situation is detected), the automatic enabling means acquire data from an external data source.

Both the known-art devices mentioned in the foregoing thus have in common the fact that all the functional components of the "wearable protection device" are connected to a thin support layer, such that on activation/inflation of the bag, there is a substantial structural and functional weakening of the whole wearable device which is therefore rendered completely unusable and must be eliminated in its entirety.

Notwithstanding the continuous evolution of airbag systems, there still exist various drawbacks, of both structural and functional types.

In particular, with reference to garments and/or protective devices directly wearable by individuals such as, for example, motor vehicle drivers (whether of road, track or off-road type), the structural and functional combination of airbag systems of this specific type of garment creates significant problems.

First, a distinction has to be drawn between garments in which the airbag is associated to a wearable lining below the "main" garment (in the sector jargon an "undersuit" to be worn beneath leather motorcycle suits) and garments in which the airbag is associated to a supplementary vest to be worn beneath motorcycle jerkins for road/tourism use.

With particular reference to the undersuit, a first drawback is that the lining of the undersuit must be sufficiently light and smooth to slide between the user's body and the suit. The lightness of the fabric with which the lining is made is disadvantageously not effective in maintaining the inflatable parts in a correct position, but the same lining actually bunches up, resulting in a deterioration in terms of comfort for the user.

The above drawback is still more significant when the airbag system is integrated in a back-guard, which in turn is connected to the upper-rear part of the undersuit: in this case, in fact, this constraining mode is such that the back-guard tends to rise towards the user's shoulders, limiting the translation/rotation of the trunk during particularly active driving, constituting a significant anatomical/functional obstacle in typical use conditions (sports and even competitive) of a motorcycle suit made in this way.

A further drawback of the airbag systems integrated in autonomous garments to be worn beneath other "outer" garments, i.e. protective against abrasions or impacts, is represented by the fact that these autonomous garments (e.g. "undersuits") impose the need for the outer garments to be one or two sizes bigger so that there will be sufficient space to wear the garment integrating the autonomous garment. This means that in the case in which the integrated airbag system in the autonomous garment activates, the user is forced to send the autonomous garment to the Manufacturer to restore the airbag system and the user will unlikely be able to use the outer garment alone - i.e. without the airbag system - as it is one or two sizes bigger than his or her usual size. The user will therefore disadvantageously not even be able to use the traditional abrasion or impact protection which is at present guaranteed by traditional protectors for shoulders and elbows, or back-guards, which are generally integrated in the outer garment.

From another point of view, the implementation of an airbag system externally of a motorcycle garment has the additional technical problem of guaranteeing an adequate resistance to abrasion of the inflatable bag, as the bag is completely exposed to the outside environment and is therefore at great risk of perforation or destruction by rubbing at exactly the moment of expansion thereof.

A second drawback is that the activation of the airbag system following an event with a potential risk inevitably leads to the need to replace the bag after the activation thereof, i.e. after its "explosion", or inflation. In this matter, in fact, it is not infrequent for a type of accidental event to take place, in which the part of the garment protecting the user from abrasion, such as for example the leather cladding of a suit or a motorcycle jerkin, undergoes limited damage, or not very invasive damage, while the airbag disadvantageously undergoes a single and irreversible activation. In this type of accident it can therefore be appropriate and desirable to have a partial repair made on the garment, i.e. a restoring of the bag and of the airbag system in its entirety, which at present is not possible due to the modern known structural and functional coupling modes between the airbag system and the garment. At present, therefore, in order to proceed safely, the motorcyclist should have available a new garment, also provided with an airbag system, but this involves a much greater economic outlay considering the cost of a second garment.

The issues of integration of the airbag in motorcycle garments are made even more serious by the fact that the predisposing of the spaces for the airbag must take account not only of the inflatable bag but also of the whole set of components dedicated to the actual inflation; in fact, having to take account of a load of compressed gas - or a "gas generator" - it is necessary for the airbag system to include the presence and correct functionality also of an electronic detecting, control and activation system activating the gas generator. The bag and all the other components of the system disadvantageously cannot therefore be easily separated from the garment in which they are integrated. Therefore, in the case of activation or in the case where it is necessary to proceed with a simple maintenance operation on one or more components (bag, gas generator, electronics, battery, etc.), the whole garment, and not only the bag or single component, will have to be returned to the Manufacturer with a consequent impossibility of use of both the outer garment and the airbag system for long periods of time, which is a difficult situation to accept on the part of the consumer.

It is further necessary to consider that according to the season and the sport (equitation, skiing, motorcycling etc.) the users participating in dynamic sports use garments having different characteristics, for example more or less thermal or light. Today, therefore, in order to have the same level of safety, the user is disadvantageously forced to buy various garments, according to the season and the sport, each of said garments being provided with a dedicated airbag system.

### AIMS OF THE INVENTION

In light of the above mentioned drawbacks, the technical task underpinning the present invention is to obviate the functional limitations of the prior art described in the foregoing. In particular, an aim of the present invention is to realise a wearable garment equipped with an airbag system that is easily integratable and removable for reasons of replacement and/or maintenance.

A further aim of the present invention is to provide a wearable garment, in particular for use with motorcycles, able to guarantee the maximum wearability and anatomical adaptability, and at the same time able to offer high performance in terms of activation velocity, degree of protection and accuracy of functioning.

A further aim of the present invention is to realise a garment which, in a case of activation of the airbag system, enables an immediate replacement of the bag which can also be done by the user.

Further, the present invention has the aim of designing a garment that can be easily made on an industrial scale, with minimum production times, costs and changes to the present-day production lines or methods, and with a high build quality (in series), high capacity to be maintained or replaced and good economic performance.

### DESCRIPTION OF THE DRAWINGS

Further characteristics and advantages of the present invention will become more apparent from the indicative, and hence non-limiting, description of one or more embodiments of the invention, as illustrated in the accompanying drawings, in which:
- figure 1 is a partly-exploded view, also partly-transparent, of a first embodiment of a garment according to the present invention, in which the main constituting parts of the invention are localised at a "back-guard" position;
- figure 2 is a partly-exploded view, also partly-transparent, of a second embodiment of a garment according to the present invention, in which the main constituting parts of the invention are localised at a "back-guard" position; and
- figure 3 is a partly-exploded view, also partly-transparent, of a third embodiment of a garment, not forming part of the present invention, in which example embodiments can be observed of autonomous functional modules, explained in more detail in the following part of the present description.

With reference to the drawings, they serve only to illustrate embodiments of the invention with the aim of better clarifying, in combination with the description, the novel principles underpinning the invention.

### DESCRIPTION OF EMBODIMENTS OF THE INVENTION

With reference to the above-described drawings, a garment wearable by a user and in accordance with the present invention has all the features of claim 1 and is denoted in its entirety by reference numeral (1) and from the structural point of view primarily comprises (beyond the classic typical structure of a garment, i.e. beyond the typical conformation of textile materials or in any case known in the sector and adapted to cover respective anatomical parts of a user), at least a passive kinetic absorption element (2) adapted to receive a predetermined quantity of kinetic energy deriving from an impact or a like event.

According to the present invention, by the expression "passive kinetic absorption element" is meant a special element or in any case connected to the base structure of a garment and which is able to receive on/inside itself a given quantity of kinetic energy deriving from a shock or impact: this kinetic energy is distributed or dissipated in the passive kinetic absorption element without the element having received a preventative change in shape or spatial or structural configuration or state of aggregation (typical examples of this type of element are the classic protection plates made of plastic, composite or metal material usually found on motorcycling garments: shoulder-guards, back-guards, elbow guards, shin guards and so on).

The invention further comprises appropriate constraining means (3) associated to the passive kinetic absorption element (2) at a predetermined anatomical region of the user, when the garment (1) is in use: typically these constraining means (which can be constituted by suitable inside housing pockets or clips or snap buttons, or velcro, laces and other similar mechanical connecting devices) hold the passive kinetic absorption element (2) in position so that it can protect a precise anatomical part of the user.

The invention also comprises at least an active kinetic absorption element (4) (which differently to passive kinetic absorption elements is reconfigured in preparation so as to vary, in general improving, its ability to absorb and/or dissipate the kinetic energy coming from a shock or an impact): an example of this type of active kinetic absorption element is typically embodied by an inflatable bag of a classic "airbag", which is configurable between a storage condition - in which it occupies a minimum positioning volume in the garment (1) - and a deployment condition - in which it occupies a use volume greater than said positioning volume.

As mentioned, the active kinetic absorption element (4) is adapted to absorb and/or distribute a predetermined quantity of kinetic energy at least in the deployment condition thereof: to reach this configuration, appropriate deploying means (5) are present, which in association with airbag-type elements can comprise a gas generator and/or a pressurised pneumatic or hydraulic load (and more in general they are adapted to determine the deployment condition of the active kinetic absorption element (4)).

Note that in the illustrative figures appended hereto the active kinetic absorption element (4) is illustrated in the deployment condition thereof (i.e. considering an inflatable bag of an airbag in the inflated condition thereof) and for reasons of clarity of the graphic representation the deployment condition has been represented separately from the garment: in any case the intention is to clarify the fact that the graphic representation of the figures intends to establish the fact that the active kinetic absorption element (4) is positioned internally of the garment (1) in both operating configurations thereof.

The determining of the deployed configuration is selectively entrusted to appropriate detecting means (6) adapted to detect at least a kinematic and/or a spatial attitude parameter of a user: the detecting means (6) can typically comprise accelerometers and/or attitude sensors and more in general kinematic detecting sensors of the user's body.

According to claim 1, in use conditions of the garment (1), at least an active kinetic absorption element (4) and said deploying means (5) are positioned in housing spaces that are structurally and physically separated with respect to a housing space of said detecting means (6) internally of the garment (1); in other words, the active kinetic absorption element (4) - or the active kinetic absorption element (4), in the case where there may be more than one thereof present - and the deploying means (5) are free of direct mechanical structural connections with the detecting means (6).

The structural/mechanical separation between the active kinetic absorption element (4) and the deploying means (5) (which remain fundamentally reciprocally connected because of the function that the deploying means (5) have to exert on the element (4)) and the detecting means (6) enables a greater freedom in positioning the detecting means (6), which can be localised in the most accurate possible way with the purpose of detecting the real kinematic conditions of the user's body - and consequently can minimise the times for calculation and processing of the state of necessity to "activate" the element (4), taking it into the deployed configuration thereof - while at the same time the element (4) and the means (5) can always be connected from the functional point of view to the means (6) without necessarily interfering with one another in terms of occupation or volume in the same area of the garment.

The structural and mechanical separation between the element (4) with the means (5) and between the means (6) also enables undefined reutilisation over time of the detecting means (6), which can also carry out the detecting function thereof in connection with an active kinetic absorption element (4) which has been inserted in replacement for a preceding element (4) which typically had been previously activated.

In more detail, it can be noted that there are also present selective activating means (7) adapted to functionally connect at least the deploying means (5) with the detecting means (6) so as to selectively determine at least said deployment condition of the active kinetic absorption element (4) and so as to maintain a structurally and physically separated positioning between the active kinetic absorption element (4), the deploying means (5) and the detecting means (6).

The selective activating means (7) in fact have the mere function of carrying appropriate signals, sourced and/or processed starting from the data gathered from the detecting means (6), to the deploying means (5), but have no ability to structurally constrain the deploying means (5), nor the active kinetic absorption element (4): for example, the selective activating means (7) can be wired connections (purely of a "signal" type) or even short-range wireless connections (transmitted via radio, sound, ultrasound or light, according to the needs of the moment).

In order to physically be able to localise and protect the active kinetic absorption element (4) and the deploying means (5) (and at the same time, in order to prevent undesired spatial/volumetric penetrations of these two structural components in the user's body following a shock or impact), it is advantageously possible to have at least a first support body (2a) present: the first support body (2a) is positionable at a first housing space facing a first anatomical portion of the user in operating conditions of the garment (1) and it is especially adapted to house the active kinetic absorption element (4) and/or the deploying means (5).

In the different possible embodiments illustrated herein, the first support body (2a) can be defined by or can comprise a shell or a plate-shaped element or an element made of a foamed/expanded material or an element having a honeycomb structure.

At the same time, the invention can include an anti-tampering element also present, interposed between the garment (1) and the active kinetic absorption element (4) and/or the deploying means (5): as mentioned in the preceding paragraph, this anti-tampering element is adapted to prevent movements or protrusions of the active kinetic absorption element (4) and/or the deploying means (5) towards a user of the garment (1) in operating conditions and typically can (partially or completely) coincide with said first support body (2a).

Again for the purpose of stably positioning and protecting the detecting means (6), a second support body (2b) can be present, which is spatially/mechanically/structurally separated from the first support body (2a) and is positionable at a second housing space facing a first anatomical portion of the user in operating conditions of the garment (1).

Given the separation between the support bodies (2a) and (2b), the second housing space is also separated from the first housing space: with the separation of the housing spaces, it can be seen that the second support body (2b) is adapted to house the detecting means (6).

From the point of view of the realisation, the second support body (2b) comprises a shell or a plate-shaped element or an element made of a foamed/expanded material or an element having a honeycomb structure.

In order to maximise the "composite" protection functions (i.e. in order to maximise the cooperation of the various "active" or "passive" elements comprised in the garment (1) in protecting the user from shocks or impacts), the first support body (2a) and the second support body (2b) are mutually cooperating so as to determine at least a passive protection against shocks and/or impacts to a single and same anatomical portion of the user, said anatomical portion typically comprising as overall extension of a spinal column; and/or
- an extension, (mono- or bilateral) of a scapula-clavicle complex; and/or
- an extension, (mono- or bilateral) of a lumbar-sacral-hip complex; and/or
- an arm and wrist extension, (for example an elbow joint complex and/or a wrist joint complex).

With the expression of "mutual cooperation" between the support bodies (2a) and (2b) is meant, even in the light of the anatomical portions used as examples herein, that though they are kept separate the two support bodies protect complementary semi-parts of the same anatomical portion: for example, considering the overall extension of the spinal column, the first support body (2a) can be positioned at the upper vertebrae while the second support body (2b) can be positioned at the lower vertebrae.

The correct functional cooperation in terms of "shared" protection of a same anatomical portion is guaranteed by appropriate relative centring means operatively interposed between the first support body (2a) and the second support body (2b): according to the technological possibilities today available, said relative centring means can comprise geometrically counter-shaped elements respectively connected at ends of the first support body (2a) and the second support body (2b) which ends are mutually facing and/or in relative proximity in use conditions of the garment (1) so as to realise at least a reciprocal alignment of the first support body (2a) with respect to the second support body (2b).

Alternatively, the relative centring means can comprise magnetic elements or magnetically active elements or magnetically activatable elements respectively connected at ends of the first support body (2a) and the second support body (2b) which ends are mutually facing and/or in relative proximity in use conditions of the garment (1).

In order to of guarantee a complete functional interface with the user, in the present invention there can be present activatable selective switching-on means (8) at least on the detecting means (6) and/or on the deploying means (5) - as a function of a command by the user him or herself: these selective switching-on means can for example comprise an activating switch and an activating circuit interposed between said activating switch and the detecting means (6).

Note that in the accompanying figures the selective switching-on means (8) have been indicated by way of example at an electric signal connection which belongs to the selective activating means (7): this possibility is to be understood as non-limiting, as the means (8) can also be positioned in another way as long as they are adapted to intervene on the flow of signals carried by the selective activating means (7).

In still greater detail, the activating switch can be associated to a worn group and/or connection group such as for example a belt and/or a pair of braces: the worn group is associable to the first support body (2a) or the second support body (2b) and is adapted to connect the first or second support body (2a) or (2b) to the user in operating conditions of the garment (1).

In order to guarantee a correct activation/expansion of the active kinetic absorption element (4), the garment of the present invention is made in such a way as to define an expansion volume for the active kinetic absorption element (4) in the deployed configuration thereof: this expansion volume can be "static" in time and can therefore be obtained by a conformation of the constituting elements of the garment (1) so that a supplementary space is provided with respect to the occupation of the user's body, or can be defined in a "dynamic" way in time by virtue of special elasticated portions of the garment (1) which are therefore free to extend by the stretching action of the active kinetic absorption element (4) while it reaches its deployed configuration.

With reference to the typical positions of an airbag with respect to the garments today available, the above-described expansion volume can be located at:
- a preferably full extension of a spinal column; and/or
- an extension, preferably bilateral, of a scapula-clavicle complex; and/or
- an extension, preferably bilateral, of a lumbar-sacral-hip complex; and/or
- an arm and wrist extension, preferably an elbow joint complex and/or a wrist joint complex.

The above list, given by way of example, refers to a garment (1) designed and realised for the upper part of a user's body, but naturally should the garment (1) be trousers or a boot (or more in general a garment for the lower part of a user's body) the anatomical portions with respect to which the expansion volume or volumes are realised can be different (for example area of the hip, thighs, knees, ankles and so on).

It should also be noted that with respect to the possible anatomical areas/portions protectable in a "shared" way on a lower part of a user's body, the support bodies (2a) and (2b) can be dimensioned and localised in such a way as to act in cooperation on these anatomical areas/portion of the lower part of the body.

Returning to the possibility of dynamically defining the expansion volume over time, the present invention can comprise at least an adapting portion preferably made of an elastically expandable material, adapted to define a corresponding expansion volume at said deployment condition of the active kinetic absorption element (4): by way of example, with reference to a garment (1) of a jacket/jerkin or gilet type, this adapting portion can be positioned at:
- one or both of the circumaxillary regions; and/or
- a posterior/inferior-lumbosacral region; and/or
- a posterior/superior dorsoscapular region.

Conceptually similar positionings of this adapting portion can also be made, with the appropriate localisations, on trouser type garments or more in general garments destined to cover a lower part of a user's body (for example elasticated adapting portions can be defined at the inside-thigh area of a user and so on).

From the point of view of the overall manufacture of a garment (1), it can be observed how the garment (1) is made using a predetermined number of elements assembled to one another and defining in cooperation:
- a single-piece or divisible motorcycle suit; and/or
- a jacket or jerkin or gilet or bodice; and/or
- a pair of trousers; or
- any accessory garment (glove, boot/shoe and so on).

As concerns the materials of the constituting elements of the garment (1), these can be chosen and/or combined with one another (including in a heterogeneous way) from among leather or like material, or even from between textile materials and/or non-woven textile material, and/or from among synthetic or naturally-derived materials today available on the market.

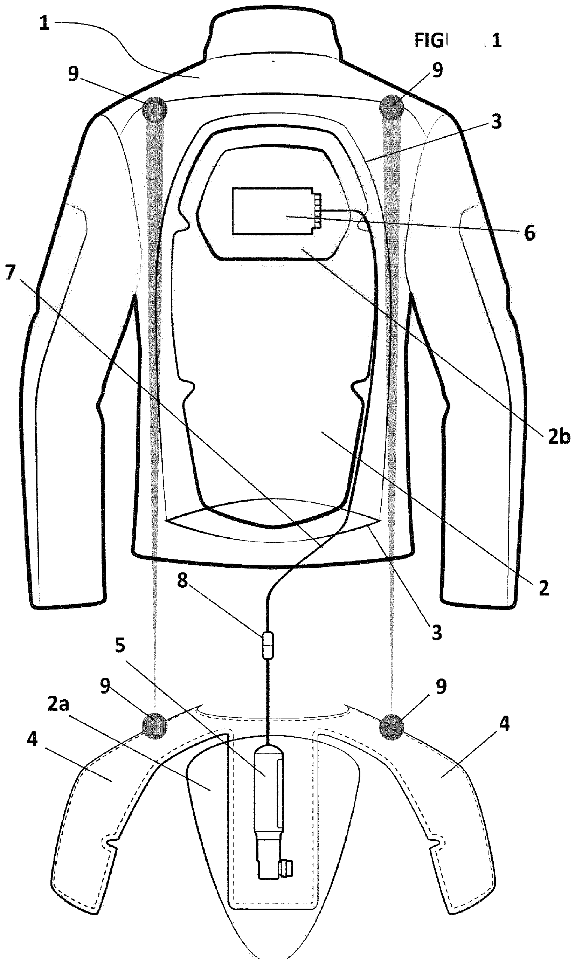

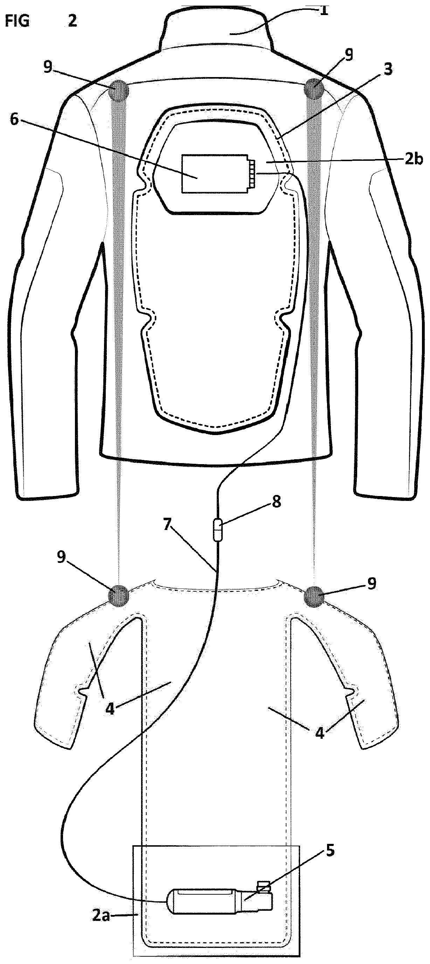

Again from the point of view of the overall layout of the garment (1) of the invention, attention should be drawn to the fact that in figures 1 and 2 the active kinetic absorption element (4) is substantially destined to protect a rear/upper part of a user: in figure 1 the "active" protection is circumscribed on the upper part of the back and the scapula-clavicle complex of a user, while in figure 2 the active protection is dedicated to the whole back.

Figures 1 and 2 display a difference in positioning and orientation of the deploying means (5), which in the two cases are positioned in such a way as to minimise the possibility of penetration into the user's body irrespective of the presence of the support body (2a).

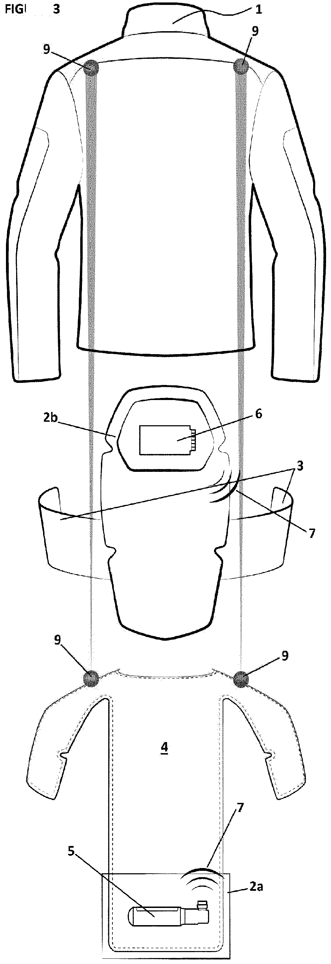

Observing figure 3, it can be seen how the second support body (2b) is substantially constituted by an entire back-guard, which can be worn independently of the actual garment (1): the detecting means are therefore mounted on the back-guard itself, and will be able to activate (via the only-functional and not structural connection) the airbag (4), which is instead nested in the garment (1).

Still with reference to figure 3, it can be observed that the transmission of the signals is entrusted to selective activating means (7) operating in wireless mode, which establish a communication bridge between the detecting means (6) and the deploying means (5).

It will be now disclosed an "autonomous airbag module" not forming part of the invention, which comprises:
- an active kinetic absorption element (4) which typically can be an inflatable bag of the "airbag" type and which has been described in the foregoing is configurable between a storage condition in which it occupies a minimum positioning volume and a deployment condition in which it is adapted to absorb and/or distribute a predetermined quantity of kinetic energy; and
- deploying means (5) adapted to determine the above-mentioned deployment condition of the active kinetic absorption element (4).

The autonomous airbag module comprises a support body (2a) (at least partially coinciding with an anti-tampering element) adapted to house the active kinetic absorption element (4) and/or the deploying means (6), as well as hooking or positioning means of at least the support body (2a) in a housing space that can be fashioned in a garment (1).

The above-mentioned hooking or positioning means enable interchangeability of the airbag module with respect to any garment that is functionally predisposed to house the same type of hooking or positioning means, and which at the same time is provided with detecting means that are "compatible" in terms of signal communication with the deploying means (6) present in the autonomous airbag module.

The connection - including in replacement or exchange parts modality - between a garment and the autonomous airbag module must be able to be carried out with maximum precision and accuracy, in order to guarantee that at the moment of activation, the inflatable bag can effectively reach the correct and ideal deployed configuration without interfering with the structural parts of the garment: for this purpose, in the autonomous airbag module there are also present single orientation means (9), preferably cooperating with the hooking or positioning means and adapted to determine a single hooking or positioning sense or direction of the autonomous airbag module in the housing space.

In other words, the single orientation means (9) enable a user to carry out an operation of insertion/connection/association of the autonomous airbag module with respect to the garment in such a way as to avoid any positioning or alignment or insertion error: according to the needs of the moment, these single orientation means (9) can advantageously comprise sensor signalling devices only corresponding to corresponding signal markers made in different positions of the housing space.

Again, by way of example, in figure 1 it can be observed that there are, in the garment (1), two optical markers (9) differentiated at least by tonality and arranged on two "opposite" sides of the garment (more precisely, arranged on two opposite sides of an inside housing pocket fashioned in the garment (1)): the optical markers correspond to like optical markers present on the autonomous airbag module, so that the user will be unerringly led to matching them during the insertion step of the autonomous airbag module in the above-mentioned inside pocket.

It is also disclosed an autonomous sensor module not forming part of the invention and comprising detecting means (6) adapted to detect at least a kinematic and/or a spatial attitude parameter of a user, which is characterised in that it comprises a support body (2b) adapted to house the detecting means (6) and appropriate hooking or positioning means of the support body (2b) so as to arrange the support body (2b) in a housing space that can be obtained in a garment (1).

Similarly to the possibility already mentioned to use the autonomous airbag module as a replacement part or an "aftermarket" part to return active protective functionality to a garment in which the preceding airbag has already been activated, the autonomous sensor module can also be used as a replacement or substitute for a corresponding module that has already been used or is faulty.

In a like way to what has been observed in the foregoing, the autonomous sensor module just inserted is equipped with single orientation means (9), cooperating with said hooking or positioning means of the support body (2b) adapted to determine a single hooking or positioning sense or direction of the sensor module in the housing space thereof: these single orientation means (9) can also comprise, again alike to what has been observed for the autonomous airbag module, sensor signalling devices only corresponding to corresponding signal markers fashioned in different positions of the housing space (or the anatomical portion of the user).

The invention provides important advantages.

Primarily, a garment according to the invention is able to guarantee timely activation of the airbag system in its entirety, as the two distinct functional sub-groups of the airbag are separated and independent only from a geometric/topological point of view, but both fall within the overall volume defined by the whole garment.

Secondly, the special structure of the invention and the multiple possibilities of integration in equally multiple types of garments make it extremely flexible at the level of production, to the advantage of the optimisation of production times.

The modularity of the garment advantageously makes possible an implementation of an autonomous airbag module, which can be supplied as a specific replacement part and can therefore restore the functionality of a garment in which a previous activation has already taken place; still more advantageously, this airbag module is independent and installable (as well as distributable) autonomously by the user, with a high degree of simplicity and convenience, both technical and economical.

The above-described autonomous airbag module can therefore be envisaged as a "universal" replacement part, adaptable to a wide range of products.

## Claims

1. A garment wearable by a user, comprising:
- at least a passive kinetic absorption element (2) adapted to receive a predetermined quantity of kinetic energy deriving from an impact or a like event;
- constraining means (3) associated to said passive kinetic absorption element (2) at a predetermined anatomical region of the user, when the garment (1) is in use;
- at least an active kinetic absorption element (4) comprising an inflatable bag, configurable between a storage condition in which it occupies a minimum positioning volume in the garment (1) and a deployment condition in which it occupies a use volume greater than said positioning volume, said active kinetic absorption element (4) being adapted to absorb and/or distribute a predetermined amount of kinetic energy in said deployment condition;
- deploying means (5) comprising a gas generator and/or a pressurized pneumatic or hydraulic load, adapted to determine said deployment condition of the active kinetic absorption element (4); and
- detecting means (6) adapted to detect at least a kinematic and/or a spatial attitude parameter of the user,
wherein, in use conditions of the garment (1), at least said active kinetic absorption element (4) and said deploying means (5) are positioned in housing spaces that are structurally and physically separated relative to a housing space of said detecting means (6) internally of the garment (1), so that said at least an active kinetic absorption element (4) and the deploying means (5) are free of direct mechanical structural connections with said detecting means, and wherein it further comprises:
- a first support body (2a) positionable at a first housing space facing a first anatomical portion of the user in operating conditions of the garment (1), said first support body (2a) being adapted to house both the active kinetic absorption element (4) and the deploying means (5), the first support body (2a) comprising a shell or a plate-shaped element or an element made of a foamed/expanded material or an element having a honeycomb structure; and
- a second support body (2b) separated from said first support body (2a) and positionable at a second housing space facing a first anatomical portion of the user in operating conditions of the garment (1), said second housing space being separated from said first housing space, said second support body (2b) being adapted to house the detecting means (6) and comprising a shell or a plate-shaped element or an element made of a foamed/expanded material or an element having a honeycomb structure;
**characterized in that** the first support body (2a) and the second support body (2b) are mutually cooperating so as to determine at least a passive protection against shocks and/or impacts to an anatomical portion of the user, said anatomical portion preferably comprising:
- an overall extension of a spinal column; and/or
- an extension, still more preferably bilateral, of a scapula-clavicle complex; and/or
- an extension, still more preferably bilateral, of a lumbar-sacral-hip complex; and/or
- an arm and wrist extension, still more preferably an elbow joint complex and/or a wrist joint complex.

2. The garment according to claim 1, wherein there are also present selective activating means (7) adapted to functionally connect at least the deploying means (5) with the detecting means (6) so as to selectively determine at least said deployment condition of the active kinetic absorption element (4) and so as to maintain a structurally and physically separated positioning between the active kinetic absorption element (4), the deploying means (5) and the detecting means (6).

3. The garment according to claims 1 or 2, wherein an anti-tampering element is also present, interposed between the garment (1) and the active kinetic absorption element (4) and/or the deploying means (5), said anti-tampering element being adapted to prevent movements or protrusions of the active kinetic absorption element (4) and/or the deploying means (5) towards a user of the garment (1) in operating conditions and preferably being at least partially coinciding with said first support body (2a).

4. The garment according to any one of the preceding claims, wherein there are further present relative centring means operatively interposed between the first support body (2a) and the second support body (2b) in order to guarantee a condition of mutual protective cooperation of an anatomical portion of the user in use conditions of the garment (1).

5. The garment according to claim 4, wherein said relative centring means comprise geometrically counter-shaped elements respectively connected at ends of the first support body (2a) and the second support body (2b) which ends are mutually facing and/or in relative proximity in use conditions of the garment (1) so as to realise at least a reciprocal alignment of the first support body (2a) with respect to the second support body (2b).

6. The garment according to claim 5, wherein the relative centring means comprise magnetic elements or magnetically active elements or magnetically activatable elements connected at ends of the first support body (2a) and the second support body (2b) which ends are mutually facing and/or in relative proximity in use conditions of the garment (1).

7. The garment according to any one of the preceding claims, wherein there are further present activatable selective switching-on means (8) at least on the detecting means (6) and/or on the deploying means (5) as a function of a user command, said selective switching-on means preferably comprising an activating switch and an activating circuit interposed between said activating switch and the detecting means (6).

8. The garment according to claim 7, when dependent on claim 4, wherein said activating switch is associated to a worn and/or connection group, still more preferably conformed as a belt and/or braces, associable to the first support body (2a) and/or to the second support body (2b), said worn and/or connection group being adapted to connect the first or the second support body (2a) or (2b) to the user in operating conditions of the garment (1).

9. The garment according to any one of the preceding claims, wherein an expansion volume is also present for the active kinetic absorption element (4) in the deployment condition thereof.

10. The garment according to claim 9, wherein said expansion volume is localized at:
- a preferably full extension of a spinal column; and/or
- an extension, preferably bilateral, of a scapula-clavicle complex; and/or
- an extension, preferably bilateral, of a lumbar-sacral-hip complex; and/or
- an arm and wrist extension, preferably an elbow joint complex and/or a wrist joint complex.

11. The garment according to any one of the preceding claims, wherein there is also present an adapting portion preferably made of an elastically expandable material, adapted to define said at least an expansion volume at said deployment condition of the active kinetic absorption element (4).

12. The garment according to claim 11, wherein said adapting portion is positioned at:
- one or both of the circumaxillary regions; and/or
- a posterior/inferior-lumbosacral region; and/or
- a posterior/superior dorsoscapular region.

13. The garment according to any one of the preceding claims, wherein it further comprises:
- a predetermined number of elements made of leather or like material defining, in cooperation, a motorcycle overall made as a single garment or as separable garments; and/or
- a predetermined number of elements made of a textile material and/or of a non-woven textile and/or of leather and/or of like material defining, in cooperation, a jacket or jerkin or gilet or bodice; and/or-a predetermined number of elements made of a textile material and/or of non-woven material and/or leather and/or of like material, defining, in cooperation, a pair of trousers.

## Patentansprüche

1. Kleidungsstück, das von einem Benutzer getragen werden kann, umfassend:
- mindestens ein passives kinetisches Aufnahmeelement (2), das eine vorgegebene Menge an kinetischer Energie aufnehmen kann, die auf einen Aufprall oder ein ähnliches Ereignis zurückzuführen ist;
- Befestigungsmittel (3), die mit dem passiven kinetischen Aufnahmeelement (2) an einer vorgegebenen anatomischen Region des Benutzers assoziiert sind, wenn das Kleidungsstück (1) in Verwendung ist;
- mindestens ein aktives kinetisches Aufnahmeelement (4), umfassend eine aufblasbare Tasche, konfigurierbar zwischen einem Verwahrungszustand, in dem es ein minimales Positionierungsvolumen im Kleidungsstück (1) einnimmt, und einem Einsatzzustand, in dem es ein Nutzungsvolumen einnimmt, das größer ist als das Positionierungsvolumen, wobei das aktive kinetische Aufnahmeelement (4) ausgelegt ist, um eine vorgegebene Menge an kinetischer Energie im Einsatzzustand aufzunehmen und/oder zu verteilen;
- Einsatzmittel (5), umfassend einen Gasgenerator und/oder eine mit Druck beaufschlagte pneumatische oder hydraulische Last, ausgelegt, um den Einsatzzustand des aktiven kinetischen Aufnahmeelements (4) zu bestimmen, und
- Erfassungsmittel (6), die ausgelegt sind, um mindestens einen kinematischen und/oder einen räumlichen Lageparameter des Benutzers zu erfassen, wobei mindestens das aktive kinetische Aufnahmeelement (4) und die Einsatzmittel (5) im Nutzungszustand des Kleidungsstücks (1) in Unterbringungsbereichen positioniert sind, die in struktureller und physikalischer Hinsicht relativ zu einem Unterbringungsbereich der Erfassungsmittel (6) innenseitig im Kleidungsstück (1) getrennt sind, sodass mindestens das aktive kinetische Aufnahmeelement (4) und die Einsatzmittel (5) frei von unmittelbaren mechanischen strukturellen Verbindungen mit den Erfassungsmitteln sind,
und wobei es zudem umfasst:
- einen ersten Halterungskörper (2a), der an einem ersten Unterbringungsbereich positionierbar ist, der einem ersten anatomischen Abschnitt des Benutzers in Betriebszuständen des Kleidungsstücks (1) zugewandt ist, wobei der erste Halterungskörper (2a) ausgelegt ist, um sowohl das aktive kinetische Aufnahmeelement (4) als auch die Einsatzmittel (5) unterzubringen, wobei der erste Halterungskörper (2a) eine Hülle oder ein plattenförmiges Element oder ein Element umfasst, das aus einem Schaum-/aufgeschäumtem Material besteht, oder ein Element, das eine Wabenstruktur aufweist, und
- einen zweiten Halterungskörper (2b), der vom ersten Halterungskörper (2a) getrennt und an einem zweiten Unterbringungsbereich positionierbar ist, der einem ersten anatomischen Abschnitt des Benutzers in Betriebszuständen des Kleidungsstücks (1) zugewandt ist, wobei der zweite Unterbringungsbereich vom ersten Unterbringungsbereich getrennt ist, wobei der zweite Halterungskörper (2b) ausgelegt ist, um die Erfassungsmittel (6) unterzubringen, und eine Hülle oder ein plattenförmiges Element oder ein Element umfasst, das aus einem Schaum-/aufgeschäumten Material besteht, oder ein Element, das eine Wabenstruktur aufweist,
**dadurch gekennzeichnet, dass** der erste Halterungskörper (2a) und der zweite Halterungskörper (2b) gegenseitig kooperierend sind, sodass mindestens ein passiver Schutz vor Stößen und/oder Aufprall für einen anatomischen Abschnitt des Benutzers hergestellt wird, wobei der anatomische Abschnitt vorzugsweise Folgendes umfasst:
- eine Gesamtausdehnung einer Wirbelsäule, und/oder
- eine Ausdehnung, die noch bevorzugter beidseitig ist, eines Schulterblatt-Schlüsselbein-Komplexes, und/oder
- eine Ausdehnung, die noch bevorzugter beidseitig ist, eines Lenden-Kreuzbein-Hüften-Komplexes, und/oder
- eine Arm- und Handgelenksausdehnung, noch bevorzugter einen Ellbogengelenk-Komplex und/oder einen Handgelenkkomplex.

2. Kleidungsstück nach Anspruch 1, wobei auch selektive Aktivierungsmittel (7) bereitgestellt sind, die ausgelegt sind, um in funktioneller Hinsicht zumindest die Einsatzmittel (5) mit den Erfassungsmitteln (6) zu verbinden, sodass selektiv mindestens der Einsatzzustand des aktiven kinetischen Aufnahmeelements (4) bewirkt wird, und sodass eine in struktureller und physikalischer Hinsicht getrennte Positionierung zwischen dem aktiven kinetischen Aufnahmeelement (4), den Einsatzmitteln (5) und den Erfassungsmitteln (6) beibehalten wird.

3. Kleidungsstück nach Anspruch 1 oder 2, wobei auch ein Manipulationssicherungselement bereitgestellt ist, das zwischen dem Kleidungsstück (1) und dem aktiven kinetischen Aufnahmeelement (4) und/oder den Einsatzmitteln (5) eingefügt ist, wobei das Manipulationssicherungselement ausgelegt ist, um Bewegungen oder das Hervorstehen des aktiven kinetischen Aufnahmeelements (4) und/oder der Einsatzmittel (5) hinführend zu einem Benutzer des Kleidungsstücks (1) in Betriebszuständen zu vermeiden, und wobei dieses vorzugsweise mindestens teilweise mit dem ersten Halterungskörper (2a) übereinstimmt.

4. Kleidungsstück nach einem der vorhergehenden Ansprüche, wobei zudem entsprechende Zentrierungsmittel bereitgestellt sind, die betriebswirksam zwischen dem ersten Halterungskörper (2a) und dem zweiten Halterungskörper (2b) eingefügt sind, um einen Zustand der gegenseitigen Schutzkooperation eines anatomischen Abschnitts des Benutzers im Nutzungszustand des Kleidungsstücks (1) zu garantieren.

5. Kleidungsstück nach Anspruch 4, wobei die entsprechenden Zentrierungsmittel geometrisch gegenständig passend ausgeformte Elemente umfassen, die jeweils an Enden des ersten Halterungskörpers (2a) und des zweiten Halterungskörpers (2b) angeschlossen sind, wobei diese Enden im Nutzungszustand des Kleidungsstücks (1) einander zugewandt sind und/oder sich in relativer Nähe befinden, sodass mindestens eine gegenseitige Ausrichtung des ersten Halterungskörpers (2a) zum zweiten Halterungskörper (2b) hergestellt wird.

6. Kleidungsstück nach Anspruch 5, wobei die entsprechenden Zentrierungsmittel magnetische Elemente oder magnetisch aktive Elemente oder magnetisch aktivierbare Elemente umfassen, die an Enden des ersten Halterungskörpers (2a) und des zweiten Halterungskörpers (2b) angeschlossen sind, wobei diese Enden im Nutzungszustand des Kleidungsstücks (1) einander zugewandt sind und/oder sich in relativer Nähe befinden.

7. Kleidungsstück nach einem der vorhergehenden Ansprüche, wobei zudem aktivierbare selektive Einschaltmittel (8) zumindest an den Erfassungsmitteln (6) und/oder den Einsatzmitteln (5) als eine Funktion eines Befehls eines Benutzers bereitgestellt sind, wobei die selektiven Einschaltmittel vorzugsweise einen Aktivierungsschalter und einen Aktivierungskreislauf umfassen, eingefügt zwischen dem Aktivierungsschalter und den Erfassungsmitteln (6).

8. Kleidungsstück nach Anspruch 7, sofern abhängig von Anspruch 4, wobei dieser Aktivierungsschalter mit einer Trage- und/oder Verbindungsgruppe assoziiert ist, noch bevorzugter ausgebildet als ein Gurt und/oder als Tragbänder, assoziierbar mit dem ersten Halterungskörper (2a) und/oder mit dem zweiten Halterungskörper (2b), wobei die Trage- und/oder Verbindungsgruppe ausgelegt ist, um den ersten oder zweiten Halterungskörper (2a) oder (2b) mit dem Benutzer in Betriebszuständen des Kleidungsstücks (1) zu verbinden.

9. Kleidungsstück nach einem der vorhergehenden Ansprüche, wobei ein Ausdehnungsvolumen auch für das aktive kinetische Aufnahmeelement (4) in dessen Einsatzzustand bereitgestellt ist.

10. Kleidungsstück nach Anspruch 9, wobei sich das Ausdehnungsvolumen befindet an
- einer vorzugsweise vollen Ausdehnung einer Wirbelsäule, und/oder
- einer Ausdehnung, vorzugsweise beidseitig, eines Schulterblatt-Schlüsselbein-Komplexes, und/oder
- einer Ausdehnung, vorzugsweise beidseitig, eines Lenden-Kreuzbein-Hüften-Komplexes, und/oder
- einer Arm- und Handgelenksausdehnung, vorzugsweise einem Ellbogengelenk-Komplex und/oder einem Handgelenkkomplex.

11. Kleidungsstück nach einem der vorhergehenden Ansprüche, wobei auch ein Anpassungsabschnitt bereitgestellt ist, der vorzugsweise aus einem elastisch dehnbaren Material besteht, ausgelegt, um das mindestens eine Ausdehnungsvolumen am Einsatzzustand des aktiven kinetischen Aufnahmeelements (4) zu definieren.

12. Kleidungsstück nach Anspruch 11, wobei der Anpassungsabschnitt positioniert ist an:
- einer oder beiden Regionen rund um die Achselhöhle, und/oder
- einer hinteren/unteren Lenden-Kreuzbein-Region, und/oder
- einer hinteren/oberen Rücken-Schulterblatt-Region.

13. Kleidungsstück nach einem der vorhergehenden Ansprüche, wobei dieses zudem umfasst:
- eine vorgegebene Zahl an Elementen, die aus Leder oder einem ähnlichen Material gefertigt sind, und in Kooperation einen Motorradoverall definieren, der als einziges Kleidungsstück oder als separate Kleidungsstücke ausgebildet ist, und/oder
- eine vorgegebene Zahl an Elementen, die aus Textilmaterial und/oder einem Vliesstoff und/oder Leder und/oder einem ähnlichen Material bestehen und in Kooperation eine Jacke oder ein Wams oder eine Weste oder ein Mieder definieren, und/oder eine vorgegebene Zahl an Elementen, die aus Textilmaterial und/oder einem Vliesstoff und/oder Leder und/oder einem ähnlichen Material bestehen und in Kooperation eine Hose definieren.

## Revendications

1. Vêtement portable par un utilisateur, comprenant :
- au moins un élément d'absorption (2) cinétique passif, adapté pour recevoir une quantité prédéterminée d'énergie cinétique dérivant d'un impact ou d'un événement similaire ;
- des moyens de retenue (3) associés au dit élément d'absorption (2) cinétique passif en correspondance d'une région anatomique prédéterminée de l'utilisateur, lorsque le vêtement (1) est utilisé ;
- au moins un élément d'absorption (4) cinétique actif comprenant un sac gonflable, configurable entre une condition de stockage dans laquelle il occupe un volume de positionnement minimum dans le vêtement (1) et une condition de déploiement dans laquelle il occupe un volume utilisé supérieur au dit volume de positionnement, ledit élément d'absorption (4) cinétique actif étant adapté pour absorber et/ou distribuer une quantité prédéterminée d'énergie cinétique dans ladite condition de déploiement ;
- des moyens de déploiement (5) comprenant un générateur de gaz et/ou une charge pneumatique ou hydraulique comprimée, pouvant déterminer ladite condition de déploiement de l'élément d'absorption (4) cinétique actif ; et
- des moyens de détection (6) adaptés pour détecter au moins un paramètre d'attitude cinématique et/ou dans l'espace de l'utilisateur,
dans lequel, dans des conditions d'utilisation du vêtement (1), au moins ledit élément d'absorption (4) cinétique actif et lesdits moyens de déploiement (5) sont positionnés dans des espaces de logement étant structurellement et physiquement séparés par rapport à un espace de logement desdits moyens de détection (6) à l'intérieur du vêtement (1), de sorte que ledit au moins un élément d'absorption (4) cinétique actif et les moyens de déploiement (5) ne disposent pas de raccordements structurels mécaniques directs avec lesdits moyens de détection,
et dans lequel il comprend de plus :
- un premier corps de support (2a) pouvant se positionner en correspondance d'un premier espace de logement faisant face à une première portion anatomique de l'utilisateur dans des conditions de fonctionnement du vêtement (1), ledit premier corps de support (2a) étant adapté pour loger à la fois l'élément d'absorption (4) cinétique actif et les moyens de déploiement (5), le premier corps de support (2a) comprenant une coque ou un élément en forme de plaque ou un élément constitué d'un matériau en mousse/expansé ou un élément comportant une structure en nid d'abeilles ; et
- un second corps de support (2b) séparé dudit premier corps de support (2a) et pouvant se positionner en correspondance d'un second espace de logement faisant face à une première portion anatomique de l'utilisateur dans des conditions de fonctionnement du vêtement (1), ledit second espace de logement étant séparé dudit premier espace de logement, ledit second corps de support (2b) étant adapté pour loger les moyens de détection (6) et comprenant une coque ou un élément en forme de plaque ou un élément constitué d'un matériau en mousse/expansé ou un élément comportant une structure en nid d'abeilles,
**caractérisé en ce que** le premier corps de support (2a) et le second corps de support (2b) coopèrent mutuellement de sorte à déterminer au moins une protection passive contre des chocs et/ou des impacts sur une portion anatomique de l'utilisateur, ladite portion anatomique comprenant de préférence :
- une extension globale d'une colonne vertébrale ; et/ou
- une extension, encore plus préférablement bilatérale, d'un ensemble scapulo-claviculaire ; et/ou
- une extension, encore plus préférablement bilatérale, d'un ensemble hanche-sacro-lombaire ; et/ou
- une extension de bras et de poignet, encore plus préférablement un ensemble d'articulation de coude et/ou un ensemble d'articulation de poignet.

2. Vêtement selon la revendication 1, dans lequel se trouvent également des moyens d'activation (7) sélectifs adaptés pour raccorder fonctionnellement au moins les moyens de déploiement (5) aux moyens de détection (6) de sorte à déterminer sélectivement au moins ladite condition de déploiement de l'élément d'absorption (4) cinétique actif et de sorte à maintenir un positionnement séparé structurellement et physiquement entre l'élément d'absorption (4) cinétique actif, les moyens de déploiement (5) et les moyens de détection (6).

3. Vêtement selon la revendication 1 ou 2, dans lequel se trouve également un élément anti-violation, interposé entre le vêtement (1) et l'élément d'absorption (4) cinétique actif et/ou les moyens de déploiement (5), ledit élément anti-violation étant adapté pour empêcher des mouvements ou des saillies de l'élément d'absorption (4) cinétique actif et/ou des moyens de déploiement (5) vers un utilisateur du vêtement (1) dans des conditions de fonctionnement et de préférence coïncidant au moins partiellement avec ledit premier corps de support (2a).

4. Vêtement selon l'une quelconque des revendications précédentes, dans lequel se trouvent de plus des moyens de centrage relatifs fonctionnellement interposés entre le premier corps de support (2a) et le second corps de support (2b) afin de garantir une condition de coopération de protection mutuelle d'une portion anatomique de l'utilisateur dans des conditions d'utilisation du vêtement (1).

5. Vêtement selon la revendication 4, dans lequel lesdits moyens de centrage relatifs comprennent des éléments ayant une forme géométriquement complémentaire reliés respectivement aux extrémités du premier corps de support (2a) et du second corps de support (2b) dont les extrémités se font face mutuellement et/ou se trouvent dans une proximité relative dans des conditions d'utilisation du vêtement (1) de sorte à réaliser au moins un alignement réciproque du premier corps de support (2a) par rapport au second corps de support (2b).

6. Vêtement selon la revendication 5, dans lequel les moyens de centrage relatifs comprennent des éléments magnétiques ou des éléments actifs magnétiquement ou des éléments, pouvant être activés magnétiquement, reliés aux extrémités du premier corps de support (2a) et du second corps de support (2b) dont les extrémités se font face mutuellement et/ou se trouvent dans une proximité relative dans des conditions d'utilisation du vêtement (1).

7. Vêtement selon l'une quelconque des revendications précédentes, dans lequel se trouvent de plus des moyens de commutation (8) sélectifs pouvant être activés au moins sur les moyens de détection (6) et/ou sur les moyens de déploiement (5) en fonction d'une commande de l'utilisateur, lesdits moyens de commutation sélectifs comprenant de préférence un interrupteur d'activation et un circuit d'activation interposés entre lesdits interrupteur d'activation et les moyens de détection (6) .

8. Vêtement selon la revendication 7, lorsqu'elle dépend de la revendication 4, dans lequel ledit interrupteur d'activation est associé à un groupe porté et/ou de raccordement, encore plus préférablement à forme de ceinture et/ou de bretelles, pouvant s'associer au premier corps de support (2a) et/ou au second corps de support (2b), ledit groupe porté et/ou de raccordement étant adapté pour raccorder le premier ou le second corps de support (2a) ou (2b) à l'utilisateur dans des conditions de fonctionnement du vêtement (1).

9. Vêtement selon l'une quelconque des revendications précédentes, dans lequel un volume d'expansion se trouve aussi pour l'élément d'absorption (4) cinétique actif dans la condition de déploiement de celui-ci.

10. Vêtement selon la revendication 9, dans lequel ledit volume d'expansion est localisé en correspondance :
- d'une extension préférablement complète d'une colonne vertébrale ; et/ou
- d'une extension, préférablement bilatérale, d'un ensemble scapulo-claviculaire ; et/ou
- d'une extension, préférablement bilatérale, d'un ensemble hanche-sacro-lombaire ; et/ou
- d'une extension de bras et de poignet, préférablement d'un ensemble d'articulation de coude et/ou d'un ensemble d'articulation de poignet.

11. Vêtement selon l'une quelconque des revendications précédentes, dans lequel se trouve aussi une portion d'adaptation, de préférence constituée d'un matériau expansible élastiquement, adaptée pour définir ledit au moins un volume d'expansion en correspondance de ladite condition de déploiement de l'élément d'absorption (4) cinétique actif.

12. Vêtement selon la revendication 11, dans lequel ladite portion d'adaptation est positionnée en correspondance :
- d'une ou des deux régions situées autour de l'axillaire ; et/ou
- d'une région postérieure/inférieure lombo-sacrée ; et/ou
- d'une région postérieure/supérieure dorso-scapulaire.

13. Vêtement selon l'une quelconque des revendications précédentes, dans lequel il comprend de plus :
- un nombre prédéterminé d'éléments en cuir ou constitués d'une matière similaire définissant, en coopération, une combinaison de moto constituée d'un seul vêtement ou de vêtements pouvant être séparés ; et/ou
- un nombre prédéterminé d'éléments constitués d'une matière textile et/ou d'une étoffe non tissée et/ou en cuir et/ou d'une matière similaire définissant, en coopération, une veste ou un blouson ou un gilet ou un corsage ; et/ou un nombre prédéterminé d'éléments constitués d'une matière textile et/ou d'une matière non tissée et/ou en cuir et/ou d'une matière similaire, définissant, en coopération, un pantalon.
